# EUROPEAN PATENT SPECIFICATION

(11) **EP 1 932 069 B1**
(45) Date of publication and mention of the grant of the patent: **31.12.2008**
(21) Application number: 06805990.6
(22) Date of filing: 02.10.2006
(51) Int. Cl.: G05D 11/13

(54) **COLOURED WASHING FOAM SUPPLY DEVICE AND PROCESS IN AN AUTOMATIC CAR WASH FACILITY**
EINRICHTUNG ZUM ZUFÜHREN VON FARBIGEM WASCHSCHAUM UND PROZESS IN EINER AUTOWASCHANLAGE
DISPOSITIF DISTRIBUTEUR DE MOUSSE DE LAVAGE COLOREE DANS UNE INSTALLATION DE LAVAGE AUTOMATIQUE DE VEHICULES AUTOMOBILES

(30) Priority: 05.10.2005 IT MI20051872
(43) Date of publication of application: 18.06.2008
(73) Proprietor: Ceccato, S.p.A., 36041 Alte Ceccato di Montecchio Maggiore (IT)
(72) Inventor: DE SILVIO, Marcelo, I-36100 Vicenza (IT); SIGNORE, Maurizio, I-36077 Altavilla Vicentina (IT)
(74) Representative: Rapisardi, Mariacristina
(86) International application number: PCT/EP2006/009546
(87) International publication number: WO 2007/039266

(56) References cited:
- US-A- 4 006 703
- US-A- 5 575 852

## Description

The present invention refers to a device and process of supplying coloured washing foam in an automatic car wash.

The traditional systems of generation and supply of coloured washing foams in automatic car washes, whether of the gate type or the tunnel type, comprise a repetition of independent supply groups of different colour foam.

Each supply group features a metering pump for the foaming agent, a mixer, an air inlet valve and a water inlet valve in the mixer, and an arcade of spray nozzles connected to the mixer outlet.

The supply groups supply the washing foam at different heights in order to apply a series of substantially horizontal washing foam stripes on the vehicle.

The foaming agent is united with water in general before the inlet to the mixer where the air inlet allows the production of the washing foam which is finally sent to the nozzles.

The application of foamed and coloured products during the various washing phases represents significant added value.

Actually, the user has an obvious visual perception of the fact that a washing product is being applied.

Furthermore, the foam remains longer in contact with the surface to be washed and, from the moment it is supplied ahead of the brushes' action, it reduces the noise generated while the latter are in use, softening their action.

Each foaming agent may feature either a chromatic effect or a specific technical property. In this latter case for example, a foaming agent may feature a better suitability to wash metal surfaces coated with metallic paints, with non-metallic paints, with light or dark paints, or even a better suitability to wash metal surfaces under winter or summer weather conditions, etc...

The traditional supply systems of traditional washing foams present various drawbacks.

First of all their flexibility of use is very limited.

The nozzles of the various supply groups as said each supply at a given height of the vehicle a substantially horizontal coloured foam stripe over the entire length of the vehicle itself, but there is no possibility of varying the overall chromatic effect since the exclusion of a supply group would entail the unwanted lack of washing foam along an area of the vehicle.

From inside the vehicles, the visual perception of the coloured washing foam stripes is limited to their portion that runs on the glasses, therefore the horizontal stripes below the glasses are not visible.

The cost of traditional systems is significant as these provide for a multiplication of supply groups as many times as the number of coloured foaming agents to be supplied. To limit the cost of traditional systems, the number of supply groups is reduced but so is the availability of foaming agents having different technical properties to meet different washing conditions.

A technical task of the present invention is to, therefore, make a coloured washing foam supply device and process in an automatic car wash which allow eliminating the technical disadvantages of the known art.

Within this technical task an object of the invention is to make a coloured washing foam supply device and process in an automatic car wash which feature a high flexibility of use in order to generate a washing foam available with a chromatic effect and technical property chosen among a plurality.

Another object of the invention is to make a coloured washing foam supply device and process in an automatic car wash which prove to be decidedly economical.

The last but not least object of the invention is to make a coloured washing foam supply device and process in an automatic car wash extremely efficient and productive without presenting any risk to the safety of vehicles.

The technical task, as well as these and other objects, according to the present invention, are achieved by making a coloured washing foam supply device in an automatic car wash characterised in that it comprises: a mixer; water supply means and air supply means to said mixer; a first metering unit of a first coloured foaming agent, connected to said mixer; at least a second metering unit of a second foaming agent featuring different colouring compared to said first foaming agent, also connected to the mixer; a plurality of nozzles supplying said washing foam resulting from the mixture of said water, said air, said first and at least a said second foaming agent; and an operating parameter control unit of at least said supply means of said water and/or of said supply means of said air and/or of said first metering unit and/or of said second metering unit; said control unit featuring programmable storage means of a plurality of combinations of said operating parameters' time course.

The present invention also discloses a process for supplying a coloured washing foam in an automatic car wash, characterised in that it consists in defining a plurality of effects of said washing foam on vehicles, associating with each of said effects a combination chosen from a plurality of combinations of the time course of the parameters of at least flow rate and/or quantity with which water, air, a first coloured foaming agent and at least a second foaming agent featuring different colouring compared to said first foaming agent are mixed, storing each combination, and making the desired effect by selecting the combination associated with it.

Furthermore, other characteristics of the present invention are defined in the following claims.

Further characteristics and advantages of the invention will be more obvious from the description of a preferred but not exclusive embodiment of the coloured washing foam supply device and process in an automatic car wash according to the invention, depicted by way of example and not limitation in the accompanying drawings, in which:
- figure 1 shows a schematic view of a preferred way of making an installation complying with the present invention;
- and figure 2 shows an illustration of a chromatic effect obtainable from the installation of figure 1.

The coloured washing foam supply device in an automatic car wash is generically indicated by reference 1.

It may be used either in a tunnel-type installation in which a vehicle moves into the tunnel, or in a gate-type installation in which it is the gate itself that moves onto the vehicle.

The device 1 comprises a mixer 2 to which water supply means 3 and air supply means 4 are connected.

The water supply means 3 comprise a hydraulic line 15 featuring a water supply valve 16.

The air supply means 4 comprise a pneumatic line 13 featuring an air supply valve 14.

The device 1 further comprises a first metering unit 5 of a first coloured foaming agent, and a least a second metering unit 6 of a second foaming agent featuring different colouring compared to the first foaming agent.

In the particular depicted embodiment a third metering unit 7 and a fourth metering unit 8 are also present.

Preferably the first, second and third foaming agents each feature a different primary colour, yellow, red or blue, while the fourth foaming agent features a white colour. In this way, the four foaming agents may be mixed in variable proportion to give birth to a vast range of colours and shades.

Each metering unit 5, 6, 7, and 8 comprises a respective metering pump 17, 18, 19 and 20.

Each metering pump 17, 18, 19 and 20 is preferably connected to the hydraulic line 15 upstream or downstream from the water supply valve 16.

The device 1 also comprises a plurality of supply nozzles 9, fixed or mobile and in particular rotating, of the washing foam resulting from the mixture taking place in the mixer 2 of water, air, the first and at least the second foaming agent.

A control unit 10, preferably a PLC, controls the operating parameters of at least the water supply means 3 and/or of the air supply means 4 and/or of the first metering unit 5 and/or of at least a second metering unit.

In particular, the control unit 10 controls both the water supply means 3, and the air supply means 4 and every present metering unit 5, 6, 7, and 8.

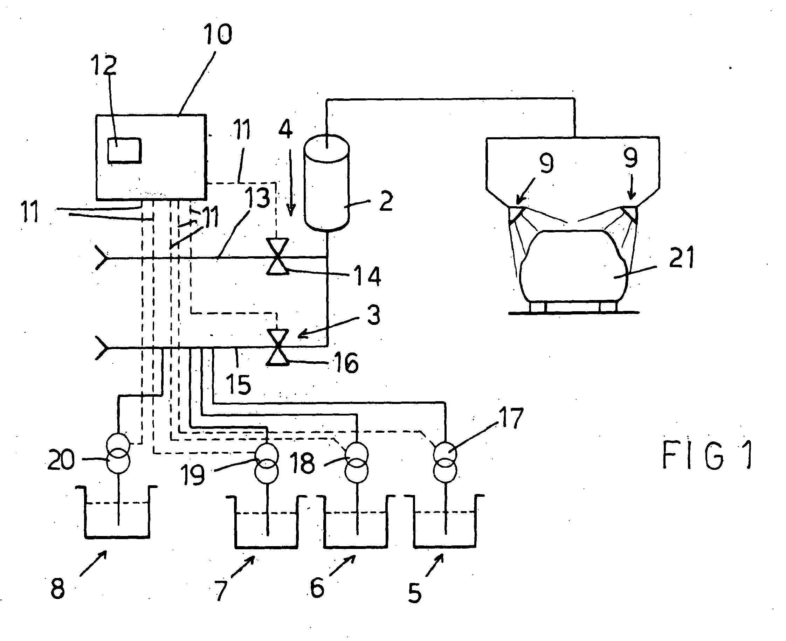

In figure 1, the connection lines 11, through which the control unit 10 controls the various components of the device, are represented by dashes.

In turn, the control unit 10 features programmable storage means 12 of a plurality of combinations of the time course of the operating parameters of the components of device 1.

The coloured washing foam supply process consists in defining a plurality of effects of the washing foam on vehicles, in associating with each of said effects a combination chosen from a plurality of combinations of the time course of the parameters of at least flow rate and/or quantity with which water, air, and each foaming agent are mixed, in storing each combination, and in making the desired effect on vehicles by selecting the combination associated with it.

The effect may be purely chromatic and/or technical.

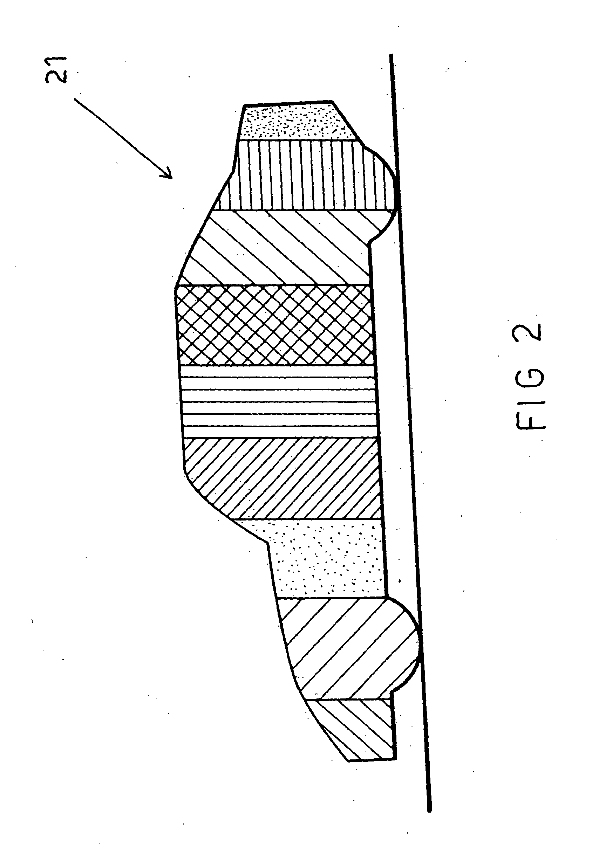

A chromatic effect may consist in substantially vertical striping with foam stripes in a set number, width and colour, as depicted on vehicle 21 of figure 2.

The overall chromatic effect may be varied at will and may be modified by choosing another combination.

Furthermore, the possible rotation of the nozzles 9 may contribute to modifying in a more creative way the geometry of the drawing made by the washing foam on the vehicle.

The combinations to carry out successive washings may be selected by also following a set sequence or randomly.

A technical effect may instead consist in a particularly efficient washing action for metal surfaces coated with metallic paints, or in a particularly efficient washing action for metal surfaces coated with non-metallic paints, or in a particularly efficient washing action for metal surfaces having the temperature of the room in which the washing is carried out, or in a washing action which adjusts to local temperature changes in the metal surfaces (for example the part of the body around the car's engine is in general warmest) or to local changes in the degree of dirt present on the metal surfaces.

In particular, the user, through special programming means not shown, selects the technical effect which is communicated to the control unit 10 which, in turn, extracts from the storage means 12 the combination of the time course of the operating parameters of the air valve 14, of the water valve 16 and of the metering pumps 17, 18, 19 and 20 which correspond to the effect preselected by the user.

In each combination a time change in the water flow rate for example may entail a change in the flow rate of the washing foam or in the dilution of the foaming agents, a time change in the air flow rate may determine a change in the washing foam's consistency, a change in the flow rate of each foaming agent may entail a change in the foam's colouring.

The control unit, through the control of the operating parameters, is capable of regulating the density and flow rate of the generated washing foam, and may activate as necessary the supply of only one, some or all available foaming agents.

The coloured washing foam production device and process of the present invention feature high flexibility to create chromatic and/or technical effects changeable in function of the preselected combination.

Although proven to be extremely flexible, the device turns out to be structurally simplified because it eliminates the needs to multiply the components to offer a variety of effects.

The coloured washing foam production device and process for an automatic car wash thus conceived is subject to numerous modifications and variations, all of which fall under the scope of the inventive concept; furthermore, all details may be replaced by technically equivalent elements.

In practice, all materials used, as well as the dimensions, may be anything depending on needs and on the state of the art.

## Claims

1. Coloured washing foam supply device in an automatic car wash facility **characterised in that** it comprises: a mixer; water supply means and air supply means to said mixer; a first metering unit of a first coloured foaming agent, connected to said mixer; at least a second metering unit of a second foaming agent featuring different colouring compared to said first foaming agent, also connected to the mixer; a plurality of nozzles supplying said washing foam resulting from the mixture of said water, of said air, of said first and at least of a said second foaming agent; and an operating parameter control unit of at least said supply means of said water and/or of said supply means of said air and/or of said first metering unit and/or of said second metering unit; said control unit featuring programmable storage means of a plurality of combinations of the time course of said operating parameters.

2. Washing foam supply device according to claim 1, **characterised in that** each metering unit comprises a metering pump.

3. Washing foam supply device according to one or more preceding claims, **characterised in that** it comprises a first metering unit of a red foaming agent, a second metering unit of a blue foaming agent, and a third metering unit of a yellow foaming agent.

4. Washing foam supply device according to one or more preceding claims, **characterised in that** it comprises a fourth metering unit of a white foaming agent.

5. Washing foam supply device according to one or more preceding claims, **characterised in that** said air supply means comprise a pneumatic line featuring an air supply valve.

6. Washing foam supply device according to one or more preceding claims, **characterised in that** said water supply means comprise a hydraulic line featuring a water supply valve.

7. Washing foam supply device according to one or more preceding claims, **characterised in that** said metering pump of said first metering unit and of at least a said second metering unit are connected to said hydraulic line upstream or downstream from said water supply valve.

8. Washing foam supply device according to one or more preceding claims, **characterised in that** said control unit comprises a PLC.

9. Washing foam supply device according to one or more preceding claims, **characterised in that** said nozzles are fixed.

10. Washing foam supply device according to one or more preceding claims, **characterised in that** said nozzles are mobile and in particular rotating.

11. Process for supplying a coloured washing foam in an automatic car wash, **characterised in that** it consists in defining a plurality of effects of said washing foam on vehicles, associating with each of said effects a combination chosen from a plurality of combinations of the time course of the parameters of at least flow rate and/or quantity with which water, air, a first coloured foaming agent and at least a second foaming agent featuring different colouring compared to said first foaming agent are mixed, storing each combination, and making the desired effect by selecting the combination associated with it.

12. Process according to the preceding claim, **characterised in that** said effect is chromatic.

13. Process according to one or more preceding claims, **characterised in that** said chromatic effect consists of substantially vertical striping with washing foam stripes in a set number, width and colour.

14. Process according to one or more preceding claims, **characterised in that** said effect is technical.

15. Process according to one or more preceding claims, **characterised in that** said effect is technical, consists of a particularly efficient washing action for metal surfaces coated with metallic paints.

16. Process according to one or more preceding claims, **characterised in that** said effect is technical, consists of a particularly efficient washing action for metal surfaces coated with non-metallic paints.

17. Process according to one or more preceding claims, **characterised in that** said effect is technical, consists of a particularly efficient washing action for metal surfaces having the temperature of the environment in which the washing is carried out, or in a washing action which is adapted to local temperature changes in the metal surfaces or to local changes in the degree of dirt present on the metal surfaces.

## Patentansprüche

1. Spendervorrichtung für farbigen Waschschaum in einer automatischen Autowaschanlage, **dadurch gekennzeichnet, dass** sie folgendes umfasst: einen Mischer; Mittel für die Wasserversorgung sowie Mittel für die Luftzufuhr zu dem besagten Mischer; eine erste Dosiereinheit von einem ersten farbigen Schaum bildenden Wirkstoff, welche mit dem besagten Mischer verbunden wird; mindestens eine zweite Dosiereinheit von einem zweiten Schaum bildenden Wirkstoff, wobei er sich durch eine unterschiedliche Färbung im Vergleich zum besagten ersten Schaum bildenden Wirkstoff auszeichnet und ebenfalls mit dem Mischer verbunden ist; eine Vielzahl von Düsen, die den besagten Waschschaum liefern, der durch die Mischung von dem besagten Wasser, der besagten Luft, dem besagten ersten und dem besagten mindestens zweiten Schaum bildenden Wirkstoff entsteht; sowie eine Kontrolleinheit für die Betriebsparameter von mindestens dem besagten Mittel für die Wasserversorgung und/oder dem besagten Mittel für die Luftzufuhr und/oder der besagten ersten Dosiereinheit und/oder der besagten zweiten Dosiereinheit; wobei sich die besagte Kontrolleinheit durch ein programmierbares Speichermedium für eine Vielzahl an Kombinationen auszeichnet, die sich auf den Zeitverlauf der besagten Betriebsparameter beziehen.

2. Spendervorrichtung für farbigen Waschschaum nach Anspruch 1, **dadurch gekennzeichnet, dass** jede Dosiereinheit eine Dosierpumpe umfasst.

3. Spendervorrichtung für Waschschaum nach einem oder mehreren der vorhergehenden Ansprüche, **dadurch gekennzeichnet, dass** sie eine erste Dosiereinheit für einen roten Schaum bildenden Wirkstoff, eine zweite Dosiereinheit für einen blauen Schaum bildenden Wirkstoff sowie eine dritte Dosiereinheit für einen gelben Schaum bildenden Wirkstoff umfasst.

4. Spendervorrichtung für Waschschaum nach einem oder mehreren der vorhergehenden Ansprüche, **dadurch gekennzeichnet, dass** sie eine vierte Dosiereinheit für einen weißen Schaum bildenden Wirkstoff umfasst.

5. Spendervorrichtung für Waschschaum nach einem oder mehreren der vorhergehenden Ansprüche, **dadurch gekennzeichnet, dass** das besagte Mittel für die Luftzufuhr eine Druckluftleitung umfasst, die sich durch ein Zuluftventil auszeichnet.

6. Spendervorrichtung für Waschschaum nach einem oder mehreren der vorhergehenden Ansprüche, **dadurch gekennzeichnet, dass** das besagte Mittel für die Wasserversorgung eine Hydraulikleitung umfasst, die sich durch ein Wasserzufuhrventil auszeichnet.

7. Spendervorrichtung für Waschschaum nach einem oder mehreren der vorhergehenden Ansprüche, **dadurch gekennzeichnet, dass** die besagte Dosierpumpe der besagten ersten Dosiereinheit sowie der mindestens zweiten besagten Dosiereinheit mit der besagten Hydraulikleitung verbunden sind, die sich oberhalb oder unterhalb des besagten Wasserzufuhrventils befindet.

8. Spendervorrichtung für Waschschaum nach einem oder mehreren der vorhergehenden Ansprüche, **dadurch gekennzeichnet, dass** die besagte Kontrolleinheit eine SPS (Speicherprogrammierbare Steuerung - *PLC*) umfasst.

9. Spendervorrichtung für Waschschaum nach einem oder mehreren der vorhergehenden Ansprüche, **dadurch gekennzeichnet, dass** die besagten Düsen fest angebracht sind.

10. Spendervorrichtung für Waschschaum nach einem oder mehreren der vorhergehenden Ansprüche, **dadurch gekennzeichnet, dass** die besagten Düsen beweglich und insbesondere drehbar sind.

11. Verfahren für die Versorgung von farbigem Waschschaum in eine automatische Waschanlage, **dadurch gekennzeichnet, dass** es aus der Bestimmung einer Vielzahl von Wirkungen des besagten Waschschaums auf Fahrzeuge besteht, wobei jeder der besagten Wirkungen eine Kombination zugeordnet wird, die aus einer Vielzahl an Kombinationen ausgewählt wurde, die sich auf den Zeitverlauf der Parameter mindestens zur Durchflussmenge und/oder zur Menge bezieht, wobei Wasser, Luft, ein erster farbiger Schaum bildender Wirkstoff sowie mindestens ein zweiter Schaum bildender Wirkstoff, der sich durch unterschiedliche Färbung im Vergleich zum ersten Schaum bildenden Wirkstoff auszeichnet, gemischt werden, wobei jede Kombination gespeichert wird und die gewünschte Wirkung gibt, indem die ihr zugeordnete Kombination ausgewählt wird.

12. Verfahren nach dem vorhergehenden Anspruch, **dadurch gekennzeichnet, dass** es sich bei der besagten Wirkung um eine chromatische handelt.

13. Verfahren nach einem oder mehreren der vorhergehenden Ansprüche, **dadurch gekennzeichnet, dass** die besagte chromatische Wirkung aus einer hauptsächlich senkrechten Streifung mit Waschschaumstreifen einer vorgegebenen Anzahl, Breite und Farbe besteht.

14. Verfahren nach einem oder mehreren der vorhergehenden Ansprüche, **dadurch gekennzeichnet, dass** es sich bei der besagten Wirkung um eine technische Wirkung handelt.

15. Verfahren nach einem oder mehreren der vorhergehenden Ansprüche, **dadurch gekennzeichnet, dass** es sich bei der besagten Wirkung um eine technische handelt und sie aus einer besonders effizienten Waschaktion auf Oberflächen aus Metall besteht, die mit metallischen Lacken überzogen werden.

16. Verfahren nach einem oder mehreren der vorhergehenden Ansprüche, **dadurch gekennzeichnet, dass** es sich bei der besagten Wirkung um eine technische handelt und sie aus einer besonders effizienten Waschaktion auf Oberflächen aus Metall besteht, die mit nichtmetallischen Lacken überzogen werden.

17. Verfahren nach einem oder mehreren der vorhergehenden Ansprüche, **dadurch gekennzeichnet, dass** es sich bei der besagten Wirkung um eine technische Wirkung handelt und dass sie aus einer besonders effizienten Waschaktion auf Metalloberflächen besteht, wobei sie die Temperatur der Umgebung haben, in welcher der Waschvorgang ausgeführt wird, oder aus einer Waschaktion, welche für lokale Temperaturwechsel auf der Metalloberfläche oder für lokale Veränderungen des Verschmutzungsgrades geeignet ist, der auf den Metalloberflächen besteht.

## Revendications

1. Dispositif d'introduction d'une mousse de lavage colorée dans une installation de lavage automatique des voitures **caractérisé en ce qu'**il comporte : un mélangeur, un moyen d'alimentation en eau et un moyen d'alimentation en air vers ledit mélangeur ; une première unité de dosage d'un premier agent moussant coloré, reliée audit mélangeur ; au moins une seconde unité de dosage d'un second agent moussant avec une coloration différente par rapport audit premier agent moussant, aussi reliée au mélangeur ; une pluralité de buses distribuant ladite mousse de lavage découlant du mélange de ladite eau, dudit air, desdits premier et au moins second agents moussants ; et une unité de contrôle des paramètres de fonctionnement d'au moins ledit moyen d'alimentation en ladite eau et/ou dudit moyen d'alimentation dudit air et/ou de ladite première unité de dosage et/ou de ladite seconde unité de dosage ; ladite unité de contrôle comportant un moyen de mémoire programmable d'une pluralité de combinaisons du laps de temps desdits paramètres de fonctionnement.

2. Dispositif de distribution d'une mousse de lavage selon la revendication 1, **caractérisé en ce que** chaque unité de dosage comporte une pompe doseuse.

3. Dispositif de distribution d'une mousse de lavage selon l'une ou plusieurs des revendications précédentes, **caractérisé en ce qu'**il comporte une première unité de dosage d'un agent moussant rouge, une seconde unité de dosage d'un agent moussant bleu, et une troisième unité de dosage d'un agent moussant jaune.

4. Dispositif de distribution d'une mousse de lavage selon l'une ou plusieurs des revendications précédentes, **caractérisé en ce qu'**il comporte une quatrième unité de dosage d'un agent moussant blanc.

5. Dispositif de distribution d'une mousse de lavage selon l'une ou plusieurs des revendications précédentes, **caractérisé en ce que** ledit moyen d'alimentation en air comporte une ligne pneumatique avec une vanne d'alimentation d'air.

6. Dispositif de distribution d'une mousse de lavage selon l'une ou plusieurs des revendications précédentes, **caractérisé en ce que** ledit moyen d'alimentation en eau comporte une ligne hydraulique avec une vanne d'alimentation d'eau.

7. Dispositif de distribution d'une mousse de lavage selon l'une ou plusieurs des revendications précédentes, **caractérisé en ce que** ladite pompe doseuse de ladite première unité de dosage et de l'au moins ladite seconde unité de dosage sont reliées à ladite ligne hydraulique en amont ou en aval de laite vanne d'alimentation d'eau.

8. Dispositif de distribution d'une mousse de lavage selon l'une ou plusieurs des revendications précédentes, **caractérisé en ce que** ladite unité de contrôle comporte un PLC.

9. Dispositif de distribution d'une mousse de lavage selon l'une ou plusieurs des revendications précédentes, **caractérisé en ce que** lesdits buses sont fixes.

10. Dispositif de distribution d'une mousse de lavage selon l'une ou plusieurs des revendications précédentes, **caractérisé en ce que** lesdits buses sont mobiles et en particulier rotatives.

11. Processus de alimentation d'une mousse de lavage colorée dans une installation de lavage automatique des voitures, **caractérisé en ce qu'**il consiste dans la définition d'une pluralité d'effets de ladite mousse de lavage sur les véhicules, en associant à chacun desdits effets une combinaison choisie d'une pluralité de combinaisons du laps de temps des paramètres d'au moins débit et/ou quantité avec eau, air, un premier agent moussant coloré et au moins un second agent moussant comportant plusieurs colorations qui sont mélangées par rapport audit premier agent moussant, en mémorisant chaque combinaison, et en créant l'effet souhaité par une sélection de la combinaison y étant associée.

12. Processus selon la revendication précédente, **caractérisé en ce que** ledit effet est chromatique.

13. Processus selon l'une ou plusieurs des revendications précédentes, **caractérisé en ce que** ledit effet chromatique est constitué d'un couchage substantiellement vertical avec des rayures de mousse de lavage dont le nombre, la largeur et la couleur sont préconfigurés.

14. Processus selon l'une ou plusieurs des revendications précédentes, **caractérisé en ce que** ledit effet est technique.

15. Processus selon l'une ou plusieurs des revendications précédentes, **caractérisé en ce que** ledit effet est technique, qu'il consiste dans une action de lavage particulièrement efficace pour surfaces métalliques traitées avec des laques métallisées.

16. Processus selon l'une ou plusieurs des revendications précédentes, **caractérisé en ce que** ledit effet est technique, qu'il consiste dans une action de lavage particulièrement efficace pour surfaces non métalliques traitées avec des laques non métallisées.

17. Processus selon l'une ou plusieurs des revendications précédentes, **caractérisé en ce que** ledit effet est technique, qu'il consiste dans une action de lavage particulièrement efficace pour surfaces métalliques ayant la température du milieu où le lavage est exécuté, ou dans une action de lavage qui est ajustée aux changements de température locaux dans les surfaces métalliques ou aux changements locaux du degré de saleté présente sur les surfaces métalliques.
